(19) Europäisches Patentamt
European Patent Office
Office européen des brevets

(11) Veröffentlichungsnummer: **0 245 691 B1**

(12) # EUROPÄISCHE PATENTSCHRIFT

(45) Veröffentlichungstag der Patentschrift: **02.12.92**

(51) Int. Cl.$^5$: **B41M 5/40**, C08G 63/18, C08G 63/64, C08J 5/18, B41J 31/00

(21) Anmeldenummer: **87106124.8**

(22) Anmeldetag: **28.04.87**

(54) **Verwendung von Folien aus Polykondensaten.**

(30) Priorität: **10.05.86 DE 3615764**

(43) Veröffentlichungstag der Anmeldung:
**19.11.87 Patentblatt 87/47**

(45) Bekanntmachung des Hinweises auf die Patenterteilung:
**02.12.92 Patentblatt 92/49**

(84) Benannte Vertragsstaaten:
**DE FR GB IT**

(56) Entgegenhaltungen:
**EP-A- 0 027 844**
**DE-A- 1 218 570**
**US-A- 4 105 633**

(73) Patentinhaber: **BAYER AG**

**W-5090 Leverkusen 1 Bayerwerk(DE)**

(72) Erfinder: **Serini, Volker, Dr.**
**Sebastian-Kneipp-Weg 2**
**W-4150 Krefeld(DE)**
Erfinder: **Schulte, Bernhard, Dr.**
**Doppelfeldstrasse 15**
**W-4150 Krefeld(DE)**
Erfinder: **Burkhardt, Claus, Dr.**
**Hasenheide 12**
**W-4150 Krefeld(DE)**
Erfinder: **Freitag, Dieter, Dr.**
**Hasenheide 10**
**W-4150 Krefeld(DE)**
Erfinder: **Hucks, Uwe, Dipl.-Ing.**
**Am Marienstift 30**
**W-4234 Alpen(DE)**
Erfinder: **Waldenrath, Werner, Dipl.-Ing.**
**Maastrichter Strasse 40**
**W-5000 Köln(DE)**
Erfinder: **Weber, Hans-Leo. Dipl.-Ing.**
**Dahlienweg 7**
**W-4049 Rommerskirchen 2(DE)**

**EP 0 245 691 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist die Verwendung von Folien aus Polykondensaten als Elektroisolierfolien, dadurch gekennzeichnet, daß die Polykondensate 75-100 Mol-% bifunktionelle Struktureinheiten der Formeln (1) und gegebenenfalls (2)

(1) 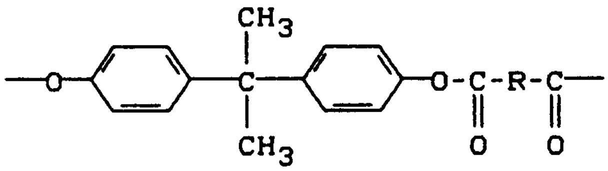

(2) 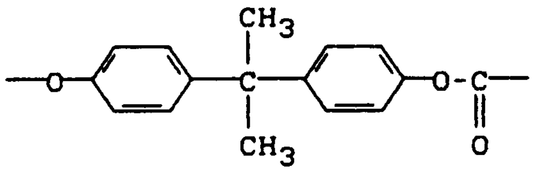

und 25-0 Mol-% bifunktionelle Struktureinheiten der Formeln (3) und gegebenenfalls (4)

(3) 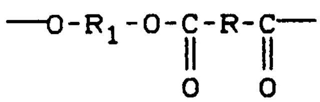

(4) 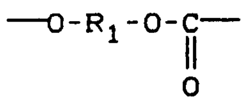

enthalthen,
wobei die Säurereste -CO-R-CO- in den Formeln (1) und (3) 75-100 Mol-% Tere- und/oder Isophthalsäurereste und zu 25-0 Mol-% Reste anderer aromatischer Dicarbonsäuren und die Reste -O-$R_1$-O- in den Formeln (3) und (4) Reste anderer Diphenole als die in den Formeln (1) und (2) enthaltenen Reste des 2,2-Bis-(4-hydroxyphenyl)-propans bedeuten,
und das Molverhältnis Estergruppen zu Carbonatgruppen in den Polykondensaten 100/0 bis 10/90 beträgt.

Dem Rest -O-$R_1$-O- in den Formeln (3) und (4) liegen beispielsweise folgende Diphenole HO-$R_1$-OH zugrunde:
Hydrochinon,
Resorcin,
Dihydroxydiphenyle,
Bis-(hydroxyphenyl)-alkane mit Ausnahme von Bis-phenol-A,
Bis-(hydroxyphenyl)-cycloalkane,
Bis-(hydroxyphenyl)-sulfide,
Bis-(hydroxyphenyl)-ether,
Bis-(hydroxyphenyl)-ketone,
$\alpha,\alpha'$-Bis-(hydroxyphenyl)-diisopropylbenzole,
sowie deren kernhalogenierte und kernalkylierte Verbindungen. Diese und weitere geeignete Diphenole sind beispielsweise in der Monographie Hermann Schnell, Chemistry and Physics of Polycarbonates, New York, Interscience Publishers 1964, Polymer Reviews, Vol. 9, der Veröffentlichung V. Serini, D. Freitag, H. Vernaleken, Polycarbonate aus o,o,o',o'-tetramethylsubstituierten Bisphenolen, Angew, Makromol, Chem. 55, (1976) 175-189 und den Deutschen Offenlegungsschriften 2 063 050, 2 211 957, 2 615 038 und 2 248 817 beschrieben.

Bevorzugt liegen dem Rest -O-$R_1$-O- folgende Diphenole HO-$R_1$-OH zugrunde:
Hydrochinon,

Resorcin,
Bis-(4-hydroxydiphenyl),
Bis-(4-hydroxyphenyl)-methan,
2,2-Bis-(4-hydroxyphenyl)-butan,
1,1-Bis-(4-hydroxyphenyl)-cyclohexan,
Bis-(4-hydroxyphenyl)-sulfid,
Bis-(4-hydroxyphenyl)-ether,
Bis-(4-hydroxyphenyl)-keton,
$\alpha,\alpha'$-Bis-(4-hydroxyphenyl)-p-diisopropylbenzol,
2,2-Bis-(3,5-dimethyl-4-hydroxyphenyl)-propan,
2,2-Bis-(3,5-dimethyl-4-hydroxyphenyl)-methan,
2,2-Bis-(3,5-dimethyl-4-hydroxyphenyl)-butan,
2,2-Bis-(3,5-dibrom-4-hydroxyphenyl)-propan und
2,2-Bis-(3,5-dichlor-4-hydroxyphenyl)-propan.

Besonderes bevorzugte Diphenole HO-$R_1$-OH sind
Hydrochinon,
Bis-(4-hydroxydiphenyl),
Bis-(4-hydroxydiphenyl)-sulfid,
Bis-(4-hydroxydiphenyl)-ether,
2,2-Bis-(3,5-dimethyl-4-hydroxyphenyl)-propan,
2,2-Bis-(3,5-dichlor-4-hydroxyphenyl)-propan und
2,2-Bis-(3,5-dibrom-4-hydroxyphenyl)-propan.

Andere aromatische Dicarbonsäuren als Tere- und Isophthalsäure, die den Säureresten -CO-R-CO- der Formeln (1) und (3) zugrundeliegen, sind beispielsweise
o-Phthalsäure,
Monochlorterephthalsäure,
2,5-Dichlorterephthalsäure,
Diphenylether-4,4'-dicarbonsäure,
Diphenylmethan-4,4'-dicarbonsäure,
Diphenyl-4,4'-dicarbonsäure,
Naphthalin-1,4-dicarbonsäure,
Naphthalin-1,8-dicarbonsäure.

Sowohl die Diphenole HO-$R_1$-OH als auch die anderen aromatischen Dicarbonsäuren als Tere- und Isophthalsäure können einzeln oder als Gemische neben dem 2,2-Bis-(4-hydroxyphenyl)-propan und der Tere- und/oder Isophthalsäure eingesetzt werden.

Den erfindungsgemäß zu verwendenden Folien liegen Polykondensate zugrunde, die bevorzugt 10-0 Mol-% und besonders bevorzugt 0 Mol-% bifunktionelle Struktureinheiten der Formeln (3) und (4) aufweisen.

Den erfindungsgemäß zu verwendenden Folien liegen Polykondensate zugrunde, worin die Säurereste -CO-R-CO- bevorzugt zu 90-100 Mol-% und besonders bevorzugt zu 100 Mol-% aus Tere- und/oder Isophthalsäureeinheiten bestehen.

In den Polykondensaten, die den erfindungsgemäß zu verwendenden Folien zugrundeliegen, kann das Verhältnis Tere-/Isophthalsäure-Reste 100/0 bis 0/100 betragen.

Wenn das Molverhältnis Ester- zu Carbonatgruppen in den Polykondensaten, die den erfindungsgemäßen Folien zugrundeliegen, kleiner oder gleich 1/1 ist, ist das Verhältnis Terephthalsäure-/Isophthalsäure-Reste bevorzugt mindestens 10/90, besonders bevorzugt mindestens 40/60, ganz besonders bevorzugt mindestens 60/40, insbesondere mindestens 80/20 und speziell 100/0.

Wenn das Molverhältnis Ester- zu Carbonatgruppen in den Polykondensaten, die den erfindungsgemäß zu verwendenden Folien zugrundeliegen, größer als 1/1 ist, ist das Verhältnis Terephthalsäure-/Isophthalsäure-Reste bevorzugt97/3 bis 3/97, besonders bevorzugt 93/7 bis 15/85, ganz besonders bevorzugt 80/20 bis 35/65 und insbesondere 70/30 bis 50/50.

Das Molverhältnis Ester- zu Carbonatgruppen beträgt in den Polykondensaten, die den erfindungsgemäß zu verwendenden Folien zugrundeliegen, bevorzugt 99/1 bis 10/90, besonders bevorzugt 98/2 bis 20/80, ganz besonders bevorzugt 97/3 bis 40/60, besser 95/5 bis 65/35 und insbesondere 90/10 bis 80/20.

Unter Polykondensaten, die den erfindungsgemäß zu verwendenden Folien zugrundeliegen, werden auch beliebige Mischungen von mindestens zwei Polykondensaten aus der Reihe der aromatischen Polycarbonate, Polyester und Polyestercarbonate verstanden, vorausgesetzt, sie genügen den eingangs gestellten Anforderungen an Art und Verhältnis der bivalenten Struktureinheiten.

So können beispielsweise Mischungen aus aromatischen Polycarbonaten und aromatischen Polyestern, Mischungen aus aromatischen Polyestern und aromatischen Polyestercarbonaten, Mischungen aus aromatischen Polycarbonaten und aromatischen Polyestercarbonaten sowie Mischungen aus aromatischen Polyestercarbonaten unterschiedlichen Polycarbonatgehaltes eingesetzt werden, wobei die Bevorzugung in der obigen Reihenfolge größer wird. Am stärksten bevorzugt sind jedoch Polykondensate, deren Zusammensetzung durch die Synthese festgelegt ist, die also nicht durch nachträgliches Mischen erhältlich sind.

Die erfindungsgemäß zu verwendenden Folien können sowohl Extrusionsfolien als auch Gießfolien sein. Die Verwendung von Gießfolien jedoch stellt eine bevorzugt Ausführungsform dieser Erfingdung dar. Unter Extrusionsfolien werden Folien verstanden, die aus der Schmelze des Polykondensats gezogen werden, z.B. über Schlitzdüsen oder auch über Ringdüsen, wie beim Blasformen. Unter Gießfolien werden Folien verstanden, die hergestellt werden, indem eine Polykondensat- Lösung auf eine Unterlage vergossen und das Lösemittel abgedampft wird.

Die Polykondensate, die für die erfindungsgemäß verwendbaren Extrusionsfolien einsetzbar sind, weisen relative Viskositäten von 1,20-1,80, bevorzugt von 1,25-1,60, besonders bevorzugt von 1,30-1,45 auf (gemessen bei c = 5 g/l und 25 °C in Phenol/o-Dichlorbenzol 1/1 Gewichtsteile).

Die Polykondensate, die für die erfindungsgemäß verwendbaren Gießfolien einsetzbar sind, weisen relative Viskositäten von 1,20-5,0, bevorzugt von 1,25-4,0 besonders bevorzugt von 1,50-3,5, insbesondere von 1,7-3,0 und besonders von 2,0-2,5 auf (gemessen bei c = 5 g/l und 25 °C in Methylenchlorid).

Während die erfindungsgemäß verwendbaren Extrusionsfolien Dicken von 0,5-1000 µm, bevorzugt 2-600 µm, besonders bevorzugt von 5-300 µm und ganz besonders bevorzugt von 10-200 µm aufweisen, haben die Gießfolien Dicken von 0,1-800 µm, bevorzugt von 1,0-600 µm, besonders bevorzugt von 2,0-400 µm und ganz besonders bevorzugt von 3,0-200 µm.

Die Herstellung der Polykondensate, die zur Herstellung der erfindungsgemäß zu verwendenden Folien einsetzbar sind, kann nach verschiedenen Verfahren erfolgen, so z.B. nach verschiedenen Schmelzumesterungsverfahren, nach Herstellungsverfahren in homogener Lösung und nach dem Zweiphasengrenzflächenverfahren. Dabei können als Monomere unterschiedliche Abkömmlinge der aromatischen Dihydroxyverbindungen und aromatischen Dicarbonsäuren und der Kohlensäure eingesetzt werden, so z.B. Bischlorkohlensäureester, Bissäurechloride, Phosgen, Dicarbonsäurediphenylester, Diphenylcarbonat und andere.

Bevorzugt werden die für die erfindungsgemäß zu verwendenden Folien einsetzbaren Polykondensate nach einem Zweiphasengrenzflächenverfahren hergestellt. So kann beispielsweise ein aromatisches Polyestercarbonat aus 2,2-Bis-(4-hydroxyphenyl)-propan und gegebenenfalls weiteren aromatischen Dihydroxyverbindungen, einer Mischung aus Tere-und Isophthalsäuredichloriden und gegebenenfalls weiteren Dicarbonsäuredichloriden, sowie Phosgen als Monomer hergestellt werden. Dazu werden beispielsweise Dihydroxyverbindungen und ein Phenol als Kettenbegrenzer in wäßrigem Alkali gelöst. Zu dieser Lösung werden ein oder mehrere organische Lösemittel, z.B. halogenierte Kohlenwasserstoffe, zugegeben und unter Rühren die Dicarbonsäurechloride zugegeben, gelöst in dem genannten Lösungsmittel. Im Anschluß daran wird unter Rühren die benötigte Menge Phosgen zugesetzt. Dann wird ein tertiäres Amin als Katalysator zugegeben und noch einige Zeit gerührt. Danach kann das gebildete Polyestercarbonat aus der abzutrennenden organischen Phase isoliert werden.

Als Kettenbegrenzer können eine ganze Reihe von einkondensierbaren monofunktionellen Verbindungen bzw. deren Abkömmlinge eingesetzt werden, so Phenole, wie z.B. Phenol, o-, m-, p-Kresol, p-tert.-Butylphenol, p-Isooctylphenol, Carbonsäuren, wie z.B. Benzoesäure, sekundäre Amine, wie z.B. Methylanilin, sowie weitere, wie sie in der Literatur aromatischer Polyester und Polyestercarbonate beschrieben sind. Abkömmlinge der phenolischen Verbindungen sind beispielsweise Chlorkohlensäureester und Phenylcarbonate, Abkömmlinge der Säuren beispielsweise Säurechloride und Phenylester. Bevorzugt werden die Phenole, insbesondere das p-Isooctylphenol.

Als Katalysatoren werden im allgemeinen tertiäre Amine, wie z.B. Triethylamin, Tripropylamin, Tributylamin und N-Ethylpiperidin, oder Phasentransferkatalysatoren, wie z.B. quaternäre Ammoniumverbindungen oder Phosphoniumverbindungen, eingesetzt. Diese und weitere Katalysatoren sind ausführlich in der Literatur für die Herstellung von aromatischen Polyestern und Polyestercarbonaten beschrieben.

Als Lösemittel werden im allgemeinen chlorierte Kohlenwasserstoffe aliphatischer und aromatischer Natur und Mischungen daraus eingesetzt, wie z.B. Methylenchlorid und Methylenchlorid/Chlorbenzol-Mischungen; bevorzugt wird Methylenchlorid verwendet.

Während der Kondensation wird der pH-Wert im allgemeinen auf über 7, insbesondere zwischen etwa 8 und 14 gehalten. Die Temperatur liegt im allgemeinen unter dem Siedepunkt der organischen Lösungsmittel, bevorzugt bei etwa 10-50 °C. Das Verfahren kann vielfältig variiert werden, beispielsweise durch Änderung der Reihenfolge und des Zeitpunktes der Zugabe von Reaktanden und Katalysator, durch Einsatz von mehr als einem Katalysator, durch Änderung des pH-Wertes, der Temperatur, der Rührbedingungen

und anderes mehr.

Die erfindungsgemäß zu verwendenden Polykondensate können die Ester- und die Carbonateinheiten mehr oder weniger blockartig oder statistisch verteilt enthalten, bedingt durch die Art des Herstellungsverfahrens. Sie können außerdem verzweigt sein, wenn in der Polykondensationsreaktion verzweigende polyfunktionelle Verbindungen mit eingebaut werden. Solche polyfunktionellen Verbindungen sind vielfältig in der Polyester- und Polyestercarbonatliteratur beschrieben.

Die Herstellung der erfindungsgemäß zu verwendenden Polykondensate durch Mischung eines oder mehrerer Polykondensate, die vorstehend genannt sind, erfolgt über die gemeinsame Lösung dieser Polykondensate oder über deren Schmelze.

Überraschend wurde gefunden, daß durch eine spezielle Führung des Zweiphasengrenzflächenverfahrens bei der Herstellung der für die erfindungsgemäßen Folien einsetzbaren Polyestercarbonate mit relativen Viskositäten von 1,7-3,0, bevorzugt von 2,0-2,5 (gemessen bei c = 5 g/l und 25 °C in Methylenchlorid) für Folien besonders geeignete Polyestercarbonate hergestellt werden können. Folien aus diesen Polyestercarbonaten zeigen insbesondere günstigere Reißdehnungen, höhere Streckverhältnisse beim Recken und weniger Abrisse bei hohen Streckverhältnissen als entsprechende, auf übliche Weise hergestellte Polyestercarbonate.

Die spezielle Führung des Zweiphasengrenzflächenverfahrens bei der Herstellung dieser besonders für Folien geeigneten Polyestercarbonate beinhaltet die Verwendung von drei aufeinander folgenden, die Durchmischung des Zweiphasengemisches bewirkenden Reaktoren, in denen die Polykondensationsreaktion kontinuierlich durchgeführt wird. Als Reaktoren können beispielsweise folgende, die Durchmischung des Zweiphasengemisches bewirkende Reaktoren eingesetzt werden: Rührbehälter, Schlaufenreaktoren, Rotor-Stator-Systeme, Düsenreaktoren und andere mehr.

In dem ersten Reaktor werden dabei die Diphenole, gelöst als Diphenolate in alkalisch wäßriger Phase, und die Säurechloride, gelöst in einem Chlorkohlenwasserstoff oder einem Gemisch von Chlorkohlenwasserstoffen, gleichzeitig und kontinuierlich eingespeist.

Bevorzugt werden Methylenchlorid/Chlorbenzol-Gemische, besonders bevorzugt Methylenchlorid als Lösemittel eingesetzt. Das aus dem ersten Reaktor kontinuierlich ausgetragene Zweiphasengemisch sowie Phosgen, gegebenenfalls Alkalilauge und gegebenenfalls zusätzliches Lösemittel, werden gleichzeitig kontinuierlich in einen zweiten Reaktor eingespeist. Das aus dem zweiten Reaktor ausgetragene Zweiphasengemisch und gegebenenfalls weitere Alkalilauge werden kontinuierlich in einen dritten Reaktor eingespeist. Das kontinuierlich aus dem dritten Reaktor austretende Zweiphasengemisch wird getrennt, die organiche Phase wird elektrolytfrei gewaschen und das Polyestercarbonat wird durch Sprühtrocknung, Eindampfextrusion, Fällung/Trocknung oder Ausdampfknetung gewonnen. Zumindest ein Teil des insgesamt eingesetzten Phosgens kann auch in den ersten Reaktor mit eingespeist werden. Der Katalysator kann in einen oder in mehrere der Reaktoren kontinuierlich eingespeist werden. Bevorzugt werden als Katalysatoren tertiäre Amine. Diese werden bevorzugt in den dritten Reaktor eingespeist. Gegebenenfalls eingesetzter Kettenbegrenzer kann in einen oder mehrere Reaktoren kontinuierlich eingespeist werden, bevorzugt wird er in den ersten Reaktor eingeführt.

Die Herstellung der erfindungsgemäß verwendbaren Extrusionsfolien aus den Polykondensaten erfolgt über die Schmelze der Polykondensate, z.B. über Schlitzdüsen oder auch über Ringdüsen, wie beim Blasformen.

Die Herstellung der bevorzugten erfindungsgemäß verwendbaren Gießfolien aus den Polykondensaten erfolgt über deren Lösung in organischen Lösemitteln. Geeigenete Lösemittel sind insbesondere chlorierte Kohlenwasserstoffe, wie z.B. Methylenchlorid, Ethylenchlorid, Chloroform und Chlorbenzol, oder deren Gemische. Bevorzugt werden Methylenchlorid/Chlorbenzol-Gemeische und insbesondere Methylenchlorid. Auch Zusätze von beispielsweise Methanol, Ethanol, Aceton, Toluol, Xylol, Ethylenglykol und seinen Mono- oder Diethern, Propylenglykol und seinen Ethern, Glycerin, Laurylalkohol und seinen Estern oder Phthalsäureester können mitverwendet werden, wobei solche Zusätze wie beispielswiese Toluol, Ether des Propylenglykols oder Ethylenglykol bevorzugt sind.

Das Vergießen der Polykondensatlösungen zu Filmdicken von 0,1-800 µm, bevorzugt von 1-600 µm, besonders bevorzugt von 2-400 µm und ganz besonders bevorzugt von 4-200 µm kann auf Band- oder Trommelgießmaschinen mit bekannten Geißern, wie Abstreif-oder Druckgießern erfolgen. So können beispielsweise Methylenchlorid-Polykondensat-Lösungen auf temperierten Trommelwalzen vergossen werden, die matt oder poliert sein können und die im allgemeinen Temperaturen von 10-40 °C aufweisen. Die Abdampfung des Methylenchlorids erfolgt größtenteils auf der Trommelwalze; Restlösungsmittel wird dann über weitere temperierte Walzen, im Umlufttrockner mit Hilfe von Heizflächen, wie IR-Strahleranordnungen, oder anderen Heizanordnungen auch bei höheren Temperaturen, z.B. von 80-150 °C, entfernt. Restspuren Lösemittel können durch weiteres Tempern, gegebenenfalls bei noch höherer Temperatur entfernt werden.

Die Foliengießgeschwindigkeiten können variiert werden und liegen im allgemeinen bei Trommelwalzen von 1-5 m Durchmesser bei 2-4000 m/sec., bevorzugt bei 20-2000 m/sec.

Die erfindungsgemäß verwendbaren Polykondensat-Gießfolien können auf technischen Reckeinrichtungen mono- oder biaxial versteckt werden, wobei das monoaxiale Verstrecken in Längsrichtung, d.h. in Gießrichtung des Gießfilms bevorzugt ist. Dazu sind bekannte technische, mit temperierbaren Walzen ausgerüstete Reckmaschinen geeignet, wobei das Verstrecken in einer Einspaltreckung, d.h. zwischen einer beheizten Walze (1) mit der Einlaufgeschwindigkeit $V_1$ und einer beheizten Walze (2) mit der höchsten Temperatur, der sogenannten Recktemperatur und einer Auslaufgeschwindigkeit $V_2$ in einem Spalt von ca. 3 bis 10 mm Breite unter Variation des Reckverhältnisses $V_1$ : $V_2$ von 1:1,05 bis 1:3,5, vorzugsweise von 1:1,1 bis 1:3,0 und insbesondere von 1:1,2 bis 1:2,5 durchgeführt wird. Im allgemeinen ist eine dritte Walze mit niedrigerer Temperatur als der Recktemperatur zur Thermofixierung nachgeschaltet.

Ebenso kann der Reckprozeß in einer Mehrspaltstreckung durchgeführt werden, wobei Reckmaschinen mit mehreren angetriebenen Walzen unterschiedlicher Geschwindigkeit und Temperatur verwendet werden und innerhalb der Verstreckzonen nicht angetriebene beheizte Walzen zur Vergleichsmäßigung des Reckprozesses eingesetzt werden. Der Durchmesser der Walzen kann von z.B. 40 bis 300 mm variiert werden, wobei im allgemeinen die Oberfläche der Reckwalzen durch Strahlen aufgerauht ist oder Kunststoff- oder Keramik-beschichtete Walzen zur besseren Haftung verwendet werden. Die Temperatur der am höchsten beheizten Reckwalze wird als sogenannte Recktemperatur $T_R$ bezeichnet, die im Bereich von ca. 170 bis 330 ° C, vorzugweise von 190 bis 300 ° C variiert wird.

Durch das Verstrecken der erfindungsgemäß zu verwendenden Folien können eine ganze Reihe von Eigenschaften vorteilhaft verändert werden, so z.B. das Schrumpfverfahren bei höherer Temperatur, mechanische und elektrischen Eigenschaften, z.B. Reißfestigkeit und Durchschlagsfestigkeit und andere mehr.

Es wurde überraschend gefunden, daß die Durchschlagsfestigkeit von Elektroisolierfolien auf Basis der erfindungsgemäß zu verwendenden Polykondensate besonders hoch ist, selbst bei relativ hohen Restsalzgehalten. Außerdem bleibt die elektrische Durchschlagsfestigkeit auch bei steigender Temperatur konstant, während im allgemeinen mit steigender Temperatur die Durchschlagsfestigkeit von Elektroisolierfolien stark abnimmt. Die Folien sind weiterhin hoch transparent, zeigen sehr hohe Wärmestandfestigkeit, gute Chemikalienresistenz, eine hohe Oberflächengüte und Stabilität gegen Thermooxidation.

Die hohe elektrische Durchschlagsfestigkeit, insbesondere auch bei erhöhten Temperaturen, sowie die Temperaturkonstanz der Dielektrizitätskonstante machen die erfindungsgemäß zu verwendenden Folien für die Herstellung sehr kleiner elektrischer und elektronischer Bauelemente besonders geeignet, wo bekanntlich oft hohe Temperaturen entstehen. Auch können aus den erfindungsgemäß zu verwendenden Folien hergestellte Bauelemente hohe Temperaturbelastungen ertragen, wie sie z.B. in Motorräumen von Kraftfahrzeugen auftreten. Diese Eigenschaften sprechen insbesondere für eine Verwendung als Dielektrikum in Kondensatoren.

Die Temperaturkonstanz der Dielektrizitätskonstante der erfindungsgemäß zu verwendenden Folien hingegen ist bei der Verwendung als Leiterbahnfolien außerordentlich nützlich. In Leiterbahnfolien wirkt die Folie zwischen den Leiterbahnen auf die Schaltung ähnlich wie ein Kondensator, d.h. bereits die unbestückte Leiterbahnfolie besitzt bei aufgebrachten Leiterbahnen eine endliche Kapazität. Bei schwankender Kapazität der Leiterbahn wird die auf der Leiterbahn montierte Schaltung beeinflußt und muß kompensiert werden. Dies ist umso schwieriger, je größer die Schwankungen der Dielektrizitätszahl mit der Temperatur sind. Da die erfindungsgemäß zu verwendenden Folien eine relativ konstante Dielektrizitätszahl aufweisen, können auch schwierige Schaltungen ohne Kompensation der Einflüsse kapazitativer Änderungen bei Temperaturschwankungen bewältigt werden.

Als Elektroisolierfolien auf dem Kondensatorgebiet sind die Folien zusätzlich auch noch deswegen interessant, weil die Metallbedampfung zu Metallüberzügen besonders hoher Haftfestigkeit führt, das Ausheilverhalten von Kondensatoren mit diesen Folien bei elektrischem Durchschlag hervorragend ist und außerordentlich dünne Folien hoher Qualität, insbesondere durch das Gießverhalten und durch zusätzliches Recken, erhalten werden können. Die hohe Qualität solcher Folien äußert sich unter anderem in hervorragenden mechanischen Eigenschaften. Die dünnen Folien hoher Qualität lassen die Herstellung sehr kleiner Kondensatoren zu.

Als Elektroisolierfolien auf dem Gebiet der Motorenisolation sind die erfindungsgemäß zu verwendenden Folien auch deswegen interessant, weil sie hohe Wärmestandfestigkeit bei geringer thermooxidativer Alterung besitzen und außerdem gegen eine Reihe von Chemikalien beständig sind.

Die Prozentangaben der nachfolgenden Beispiele beziehen sich - wenn nicht anders angegeben - auf das Gewicht.

Beispiel 1: Eigenschaften von Folien aus BPA/TER/ISO-Polyestercarbonaten mit 74 Mol-% Polyesteranteil und einem Verhältnis Terephthalat-/Isophthalat-Einheiten von 1/1

Aus 2,2-Bis-(4-hydroxyphenyl)-propan, Terephthalsäuredichlorid, Isophthalsäuredichorid, Phosgen und p-Isoctylphenol als Kettenbegrenzer wurde nach dem oben beschriebenen kontinuierlichen Zweiphasengrenzflächenverfahren ein Polyestercarbonat mit 74 Mol-% Polyesteranteil, 26 Mol-% Polycarbonatanteil und einem Verhältnis von Terephthalat-/Isophthalat-Einheiten von 1/1 hergestellt (APE 74 K). Die relative Viskosität betrug 2,03 (gemessen in Methylenchlorid bei c = 5 g/l und 25 ° C), der Na-Gehalt (aus nicht vollständig ausgewaschenen Salzen) betrug 12 ppm, die Glasübergangstemperatur betrug 198 ° C (gemessen durch Differentialthermoanalyse).

Für Vergleichszwecke wurde ein Polyestercarbonat gleicher Zusammensetzung diskontinuierlich nach dem Zweiphasengrenzflächenverfahren hergestellt (APE 74 D). Dieses wies eine relative Viskosität von 2,09 auf (gemessen wie oben).

Das APE 74 K und das APE 74 D wurden unter gleichen Bedingungen aus ihren Methylenchloridlösungen zu 12 µm dicken Folien vergossen und anschließend bei Recktemperaturen von 215 ° C verstreckt, wie oben beschrieben.

Beim APE 74 D wurde an der 12 µm-Folie (unverstreckt) eine Reißdehnung von 83 % gemessen. Das maximale Reckverhältnis betrug 1/1,9.

Beim APE 74 K wurde an der 12 µm-Folie (unverstreckt) eine Reißdehnung vo 114 % gemessen. Das maximale Reckverhältnis betrug 1/2,3.

An 6 µm-Folie aus APE 74 K, erhalten durch Verstrecken der 12 µm-Folie bei 215 ° C und einem Reckverhältnis von 1/2,0, wurden die Durchschlagsfestigkeit $E_d$ und der dielektrische Verlustfaktor bestimmt, wie aus den Tabelle 1 und 2 hervorgeht.

Die in Tabelle 1 enthaltenen hohen Werte der Durchschlagsfestigkeit, die oberhalb der Raumtemperatur deutlich ansteigen und auch bei hohen Temperaturen nicht abfallen, sind überraschend. Überraschend sind die guten Werte auch insbesondere deshalb, weil sie trotz des relativ hohen Salzgehaltes (12 ppm Na, s.o.) erreicht werden. Ebenso überraschend sind die in Tabelle 2 enthaltenen, günstig niedrigen, mit Erhöhung der Temperatur kontinuierlich abnehmenden dielektrischen Verlustfaktoren. Beiden Eigenschaften sind auf dem Elektrosektor hervorragend nutzbar. Überraschend ist auch die besonders hohe Wärmestandfestigkeit der Folien aus Polyestercarbonaten hoher relativer Viskositäten (so. z.B. bei APE 74 K, Tg = 198 ° C).

Tabelle 1a (erfindungsgemäß)

Elektrische Durchschlagsfestigkeit von verstreckten 6 µm-Folien des Polyestercarbonates APE 74 K des Beispiels 1 als Funktion der Temperatur

| T (°C) | Durchschlagsfestigkeit $E_d$ (KV/mm) Median $\tilde{x}$-Werte, DIN 53 841/VDE 0303 Teil 2, IEC-Publ. 243, Elektrode P6/P6, Medium Luft, Wechselspannung 50 Hz | | | | |
|---|---|---|---|---|---|
| | Meßreihe Nr. 1 | 2 | 3 | 4 | 5 |
| 23 | 315 | 315 | 313 | 320 | 318 |
| 50 | 385 | 388 | 380 | 392 | 390 |
| 75 | 355 | 448 | 395 | 385 | 430 |
| 100 | 347 | 412 | 381 | 410 | 405 |
| 125 | 353 | 392 | 375 | 387 | 390 |
| 150 | 338 | 380 | 382 | 375 | 395 |

**Tabelle 1b (Vergleich)**

Elektrische Durchschlagsfestigkeit von verstreckten 8 µm-Folien aus Bisphenol-A-Polycarbonat (PC), von 7 µm-Folien eines Polysulfons aus Bisphenol-A und Dichlordiphenylsulfon (PSU) und von verstreckten 12 µm-Folien aus Polyethylenterphthalat (PET)

| T (°C) | Durchschlagsfestigkeit $E_d$ (KV/mm) Median X-Werte, DIN 53 841/VDE 0303 Teil 2, IEC-Publ. 243, Elektrode P6/P6, Medium Luft, Wechselspannung 50 Hz | | |
|---|---|---|---|
| | PC | PSU | PET |
| 23 | 289 | 256 | 355 |
| 50 | 274 | 250 | 346 |
| 75 | 270 | 220 | 339 |
| 100 | 251 | 200 | 318 |
| 125 | 250 | 160 | 290 |
| 150 | 231 | 84 | 258 |

Der Vergleich der Tabellen 1a und 1b zeigt folgendes:

1) Die Durchschlagsfestigkeit der erfindungsgemäß zu verwendenden Folie steigt zwischen 23 und 50 °C um ca. 70 KV/mm an und hält das damit erreichte Niveau annähernd bis mindestens 150 °C.

2) Dagegen nehmen die Durchschlagsfestigkeiten der Vergleichsfolien aus PC, PSU und PET im Bereich von 23 bis 150 °C kontinuierlich und beträchtlich ab.

3) Die Durchschlagsfestigkeit der erfindunggemäß zu verwendenden Folie weist insbesondere bei höheren Temperaturen, wie z.B. bei 100 bis 150 °C, ein beträchtlich höheres Niveau als die Vergleichsfolien aus PC, PSU und PET auf.

**Patentansprüche**

**1.** Verwendung von Folien aus Polykondensaten als Elektroisolierfolien, dadurch gekennzeichnet, daß die Polykondensate 75-100 Mol-% bifunktionelle Strucktureinheiten der Formeln (1) und gegebenenfalls (2)

(1) 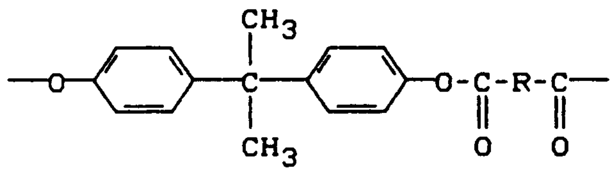

(2) 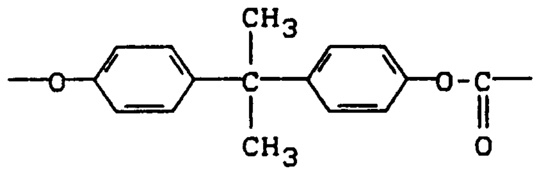

und 25-0 Mol-% bifunktionelle Struktureinheiten der Formeln (3) und gegebenenfalls (4)

(3) 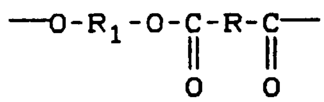

(4) 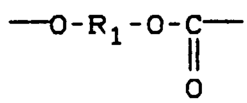

enthalten,
wobei die Säurereste -CO-R-CO- in den Formeln (1) und (3) 75-100 Mol-% Tere- und/oder Isophthalsäurereste und zu 25-0 Mol-% Reste anderer aromatischer Dicarbonsäuren und die Reste $-O-R_1-O-$ in den Formeln (3) und (4) Reste anderer Diphenole als die in den Formeln (1) und (2) enthaltenen Reste des 2,2-Bis-(4-hydroxyphenyl)-propans bedeuten,
und das Molverhältnis Ester- zu Carbonatgruppen in den Polykondensaten 100/0 bis 10/90 beträgt.

**2.** Verwendung nach Anspruch 1, dadurch gekennzeichnet, daß die Polykondensate Polyestercarbonate mit einem Molverhältnis Ester-/Carbonatgruppen 95/5-10/90 und einer relativen Viskosität von 1,7-3,0 (gemessen bei c = 5 g/l und 25 °C in Methylenchlorid) sind und nach einem kontinuierlichen Zweiphasengrenzflächenverfahren hergestellt werden, bei dem

1. die Diphenole, gelöst als Diphenolat in alkalisch wäßriger Phase, die Säurechoride, gelöst in einem Chlorkohlenwassertoff oder einem Gemisch von Chlorkohlenwasserstoffen, und gegebenenfalls Phosgen gleichzeitig und kontinuierlich in einem ersten, Durchmischung bewirkenden Reaktor eingespeist werden,
2. das kontinuierlich aus dem ersten Reaktor ausgetragene Zweiphasengemisch sowie Phosgen und gegebenenfalls Alkalilauge und gegebenenfalls weiteres organisches Lösemittel kontinuierlich in einen zweiten, Durchmischung bewirkenden Reaktor eingespeist werden,
3. das kontinuierlich aus dem zweiten Reaktor ausgetragene Zweiphasengemisch und gegebenenfalls weitere Alkalilauge kontinuierlich in einen dritten, Durchmischung bewirkenden Reaktor eingespeist werden,
4. das kontinuierlich aus dem dritten Reaktor ausgetragene, ausreagierte Zweiphasengemisch in die organische und die wäßrige Phase aufgetrennt werden, die organische Phase elektrolytfrei gewaschen wird und aus der organischen Phase das Polyestercarbonat gewonnen wird, und
5. in mindestens einen der Reaktoren kontinuierlich Katalysator und gegebenenfalls Kettenbegrenzer mit eingespeist werden.

**3.** Verwendung nach Ansprüchen 1 und 2 als Dielektrikum für Kondensatoren.

**4.** Verwendung nach Ansprüchen 1 und 2 als Leiterbahnfolien.

## Claims

**1.** The use of films of polycondensates as electrical insulating films, characterized in that the polycondensates contain 75 to 100 mol-% bifunctional structural units corresponding to formulae (1) and optionally (2)

(1) 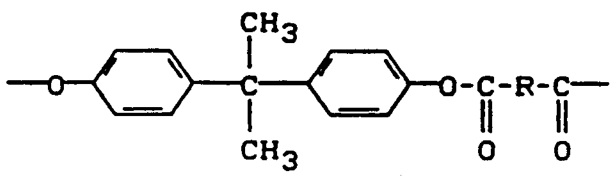

(2) 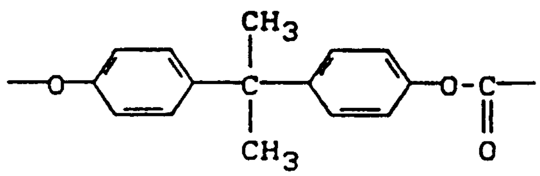

and 25 - 0 mol-% bifunctional structural units corresponding to formulae (3) and optionally (4)

(3) 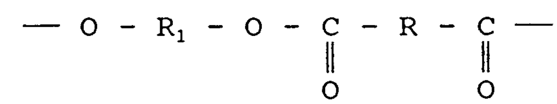

(4) 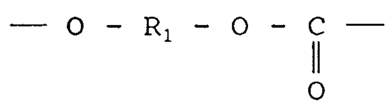

75 to 100 mol-% of the acid units -CO-R-CO- in formulae (1) and (3) being terephthalic and/or isophthalic acid units and 25 to 0 mol-% being units of other aromatic dicarboxylic acids and the units $-O-R_1-O-$ in formulae (3) and (4) being units of other diphenols than the units of 2,2-bis-(4-hydroxyphenyl)-propane units present in formulae (1) and (2),
and the molar ratio of ester to carbonate groups in the polycondensates being 100:0 to 10:90.

**2.** The use claimed in claim 1, characterized in that the polycondensates are polyester carbonates with a molar ratio of ester to carbonate groups of 95:5 to 10:90 and a relative viscosity of 1.7 to 3.0 (as measured at c 5 g/l and 25°C in methylene chloride) and are produced by a continuous two-phase interfacial process **in which**

1. the diphenols dissolved as diphenolate in alkaline aqueous phase, the acid chlorides dissolved in a chlorinated hydrocarbon or a mixture of chlorinated hydrocarbons and, optionally, phosgene are introduced simultaneously and continuously into a first reactor in which they are thoroughly mixed,
2. the two-phase mixture continuously discharged from the first reactor and also phosgene and, optionally, alkali metal hydroxide and, optionally, more organic solvent are continuously introduced into a second reactor in which they are thoroughly mixed,
3. the two-phase mixture continuously discharged from the second reactor and, optionally, more alkali metal hydroxide are continuously introduced into a third reactor in which they are thoroughly mixed,
4. the fully reacted two-phase mixture continuously discharged from the third reactor is separated into an organic phase and an aqueous phase, the organic phase is washed free from electrolyte and the polyester carbonate is recovered from the organic phase and

5. catalyst and, optionally, chain terminator are continuously introduced into at least one of the reactors.

**3.** The use claimed in claims 1 and 2 as a dielectric for capacitors.

**4.** The use claimed in claims 1 and 2 as circuit board films.

**Revendications**

**1.** Utilisation de feuilles de polycondensats comme feuilles d'isolation électrique, caractérisée en ce que les polycondensats contiennent 75 à 100 moles % de motifs structuraux bifonctionnels de formules (1) et le cas échéant (2)

(1)

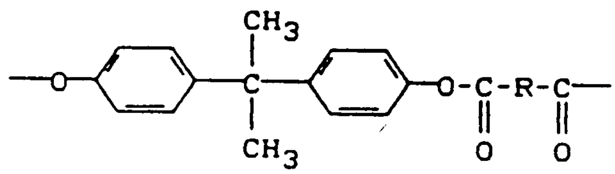

(2)

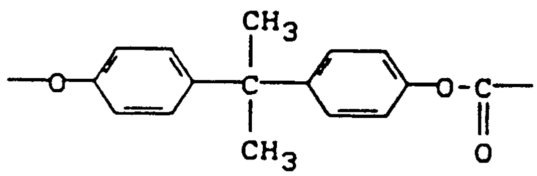

et 25-0 moles % de motifs structuraux bifonctionnels de formules (3) et le cas échéant (4)

(3)

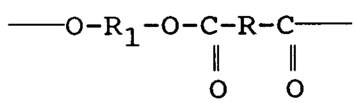

(4)

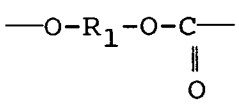

les restes d'acides -CO-R-CO- dans les formules (1) et (3) représentant 75 à 100 moles % de restes d'acide téréphtalique et/ou d'acide isophtalique et 25 à 0 moles % de restes d'autres acides dicarboxyliques aromatiques et les restes $-O-R_1-O-$ dans les formules (3) et (4) représentant des restes de diphénols autres que les restes du 2,2-bis-(4-hydroxyphényl)-propane contenus dans les formules (1) et (2),

et le rapport molaire des groupes ester au groupe carbonate dans les polycondensats ayant une valeur de 100/0 à 10/90.

**2.** Utilisation suivant la revendication 1, caractérisée en ce que les polycondensats sont des polyestercarbonates présentant un rapport molaire des groupes ester aux groupes carbonate de 95/5 à 10/90 et ayant une viscosité relative de 1,7-3,0 (mesurée pour c = 5 g/l et à 25°C dans le chlorure de méthylène) et sont préparés par un procédé continu à l'interface entre deux phases, dans lequel

1. les diphénols, dissous sous forme de diphénolate en phase aqueuse alcaline, les chlorures d'acides, dissous dans un hydrocarbure chloré ou dans un mélange d'hydrocarbures chlorés et le cas échéant du phosgène sont injectés simultanément et en continu dans un premier réacteur effectuant un brassage,

2. le mélange de deux phases déchargé en continu du premier réacteur ainsi que du phosgène et, le cas échéant, une lessive alcaline et, éventuellement, un autre solvant organique sont injectés en continu dans un deuxième réacteur effectuant un brassage,

3. le mélange de deux phases déchargé en continu du deuxième réacteur et, le cas échéant, un supplément de lessive alcaline sont injectés en continu dans un troisième réacteur effectuant un brassage,
4. le mélange de deux phases ayant réagi, déchargé en continu du troisième réacteur, est fractionné en la phase organique et la phase aqueuse, la phase organique est lavée afin qu'elle ne contienne pas d'électrolyte et le polyester-carbonate est isolé de la phase organique, et
5. du catalyseur et, le cas échéant, un agent de terminaison de chaine sont injectés conjointement en continu dans l'un au moins des réacteurs.

**3.** Utilisation suivant les revendications 1 et 2 comme diélectrique pour condensateurs.

**4.** Utilisation suivant les revendications 1 et 2 comme feuilles pour chemin conducteur.